# EUROPEAN PATENT SPECIFICATION

(11) **EP 2 073 196 B1**
(45) Date of publication and mention of the grant of the patent: **02.05.2012**
(21) Application number: 08166980.6
(22) Date of filing: 17.10.2008
(51) Int. Cl.: G10L 19/14, H04N 5/775

(54) **Apparatus and method for transmitting audio data**
Vorrichtung und Verfahren zur Übertragung von Audiodaten
Appareil et procédé pour la transmission de données audio

(30) Priority: 13.12.2007 KR 20070130145
(43) Date of publication of application: 24.06.2009
(73) Proprietor: Samsung Electronics Co., Ltd., Suwon-si, Gyeonggi-do (KR)
(72) Inventor: Lee, Seung-su, Gyeonggi-do (KR); Noh, Dae-kyoung, Gyeonggi-do (KR)
(74) Representative: Walaski, Jan Filip

(56) References cited:
- EP-A2- 1 231 795
- WO-A-2008/117234
- WO-A2-03/058826
- US-A1- 2006 184 685
- US-B1- 6 985 530
- STEVAN EIDSON ET AL: "30.2: HDMI: High-Definition Multimedia Interface" 2003 SID INTERNATIONAL SYMPOSIUM - MAY 20, 2003, BALTIMORE, MARYLAND, vol. XXXIV, 20 May 2003 (2003-05-20), page 1024, XP007008293
- "Silicon Image first to couple digital audio and video on the dvi link", INTERNET CITATION, XP002202474, Retrieved from the Internet: URL:http://www.siimage.com/press/press_pri nt/p_01_16_01.asp [retrieved on 2002-06-18]

## Description

The present invention relates to an apparatus and a method for transmitting audio data, and more particularly, to providing an image apparatus which transmits audio data to and receives audio data from audio/video apparatuses in a serial transmission manner, and a method for transmitting audio data using the same.

In general, audio signals are transmitted between audio/video (A/V) apparatuses in an analog manner or a digital manner. Recently, serial transmission, which is one form of digital transmission, has become widely used. Serial transmission includes the Audio Engineering Society/European Broadcasting Union (AES/EBU), Sony Philips Digital Interface (SPDIF), and High Definition Multimedia Interface (HDMI) protocols.

Audio data having a format which can be transmitted according to the SPDIF and HDMI protocols include decompressed audio data, such as Pulse Code Modulation (PCM) data, and audio data compressed using various compression formats, such as the Audio Coding-3 (AC3), Digital Theater System (DTS), and Moving Picture Experts Group (MPEG) formats. In such conventional serial transmission formats, audio data in a single format are transmitted over a single physical transmission line.

The document "30.2: HDMI: High-Definition Multimedia Interface", by Stevan Eidson et Al., 2003 SID INTERNATIONAL SYMPOSIUM, BALTIMORE, MARYLAND, vol. XXXIV, 20 May 2003, presents various aspects concerning the transmission of compressed audio data specified by the HDMI protocol.

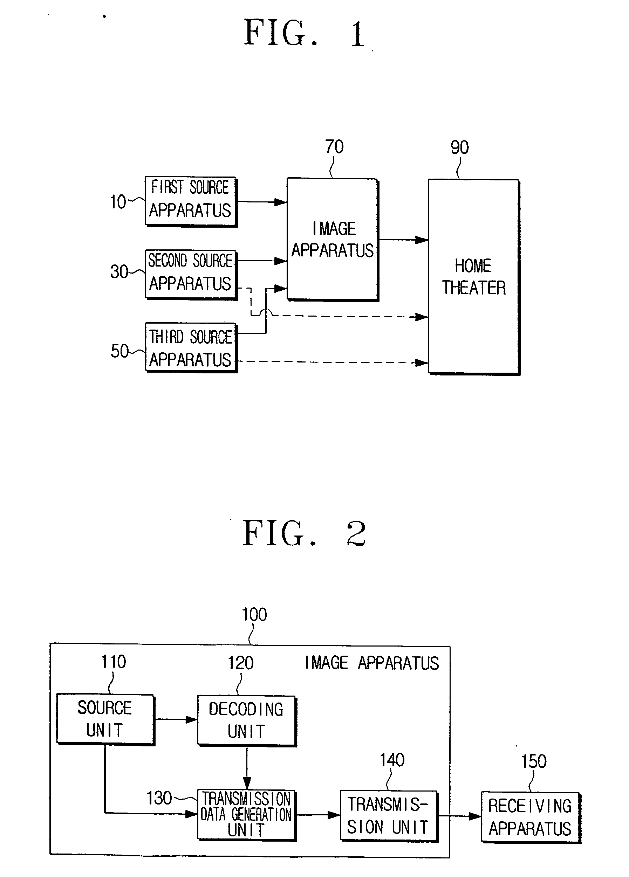

FIG. 1 illustrates a related art audio data transmission/reception system.

The audio data transmission/reception system includes a first source apparatus 10, a second source apparatus 30, a third source apparatus 50, an image apparatus 70, and a home theater 90.

The first source apparatus 10, the second source apparatus 30, and the third source apparatus 50 provide video and audio data. Specifically, the first source apparatus 10 provides audio data compressed using the MPEG format, the second source apparatus 30 provides audio data compressed using the DTS format, and the third source apparatus 50 provides audio data compressed using the AC3 format.

The image apparatus 70 displays video data provided by the first source apparatus 10, the second source apparatus 30, and the third source apparatus 50 on a screen. If the image apparatus 70 has only an MPEG decoding function, the image apparatus 70 decodes audio data provided by the first source apparatus 10, and outputs sound to a speaker which is mounted in the image apparatus 70. If the image apparatus 70 transmits the audio data provided by the first source apparatus 10 to the home theater 90, the home theater 90 outputs the audio data as sound corresponding to video data displayed on the image apparatus 70.

However, since the image apparatus 70 does not have a function for decoding audio data provided by the second source apparatus or the third source apparatus 50, the image apparatus 70 cannot output sound to the speaker and transmit the audio data to the home theater 90. Accordingly, the user must personally connect the second source apparatus 30 and the third source apparatus 50 to the home theater 90 so that the home theater 90 can output the audio data from the second source apparatus 30 and the third source apparatus 50 as sound.

Alternatively, if the second source apparatus 30 and the third source apparatus 50 perform DTS decoding and AC3 decoding directly and provide the image apparatus 70 with the decoded audio data, the image apparatus 70 can output sound corresponding to the decoded audio data to the speaker or transmit the decoded audio data to the home theater 90.

Alternatively, if the image apparatus 70 further has a decoder which performs DTS decoding and AC3 decoding, the audio data from the second source apparatus 30 and the third source apparatus 50 can be output to the speaker. If the image apparatus 70 does not have such a decoder and there is no home theater 90, the user cannot listen to the sound of the audio data provided by the second source apparatus 30 and the third source apparatus 50.

As described above, since audio data of a single format can be transferred between the source apparatuses 10, 30, and 50 and the image apparatus 70 over a single physical transmission route, if audio data which cannot be decoded by the image apparatus 70 are transmitted from the source apparatuses 10, 30, and 50, the user cannot listen to the sound through the speaker or is inconvenienced in connecting an external device such as the home theater 90 to the source apparatuses 10, 30, and 50. Alternatively, the image apparatus 70 may be required to include more decoders which can decode compressed audio data provided by the source apparatuses 10, 30, and 50, so the price of the image apparatus 70 increases.

Therefore, there is a need for transmitting audio data more conveniently.

In order to solve the above mentioned problem, a digital television and a transmission method performed in a digital television are provided as set forth in independent claims 1 and 5, respectively. Preferred embodiments are set forth in dependent claims.

The above and/or other aspects of the present invention will be more apparent by describing certain exemplary embodiments of the present invention with reference to the accompanying drawings, in which:
FIG. 1 illustrates a related art audio data transmission/reception system;
FIG. 2 is a schematic block diagram of an image apparatus;
FIG. 3 is a schematic block diagram of an image apparatus;
FIG. 4 is a schematic block diagram of an image apparatus;
FIG. 5 is a schematic block diagram illustrating a digital television as an image apparatus according to an embodiment of the present invention; and
FIG. 6 is a flowchart illustrating the operation of an image apparatus.

Examples and an embodiment of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in excessive detail since they would obscure the invention unnecessarily.

FIG. 2 is a schematic block diagram of an image apparatus.

As shown in FIG. 2, the image apparatus 100 includes a source unit 110, a decoding unit 120, a transmission data generation unit 130, and a transmission unit 140.

The source unit 110 stores audio data compressed using various compression formats, such as AC3, DTS, MPEG, or Dolby true high definition (HD) formats.

The decoding unit 120 outputs decompressed PCM audio data by decoding audio data stored in the source unit 110.

The transmission data generation unit 130 generates transmission data by combining the compressed audio data stored in the source unit 110 with the PCM audio data output from the decoding unit 120. For example, the transmission data generation unit 130 allocates a different ID to the compressed audio data and to the PCM audio data, and generates transmission data which combines the audio data of the two formats. Accordingly, a receiving party can separate audio data from the transmission data by referring to the allocated IDs.

The transmission unit 140 transmits the generated transmission data to an external receiving apparatus 150 using serial transmission. That is, the transmission unit 140 transmits the audio data to the receiving apparatus 150 using a single serial transmission channel. The serial transmission protocol which is the most useful is the HDMI protocol.

Using the above structure, audio data in two or more formats can be combined and transmitted to the receiving apparatus 150. The receiving apparatus 150 decodes audio data in a decodable format by referring to the allocated IDs of the audio data output from the transmission unit 140, and thus outputs sound.

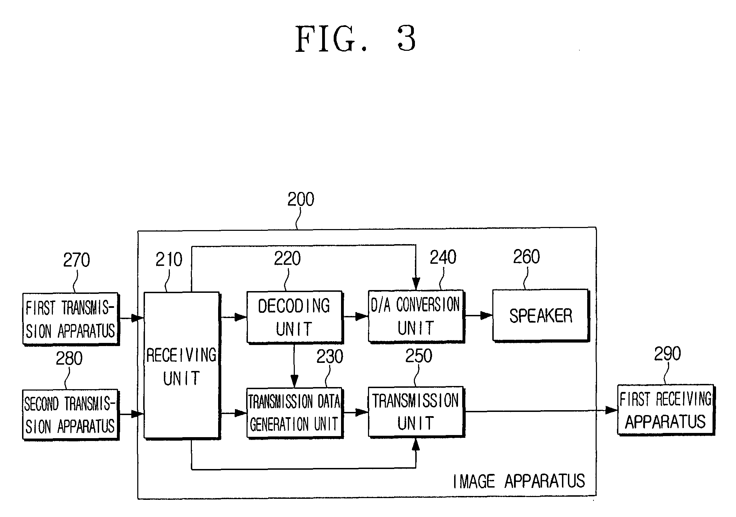

FIG. 3 is a schematic block diagram of an image apparatus.

As shown in FIG. 3, the image apparatus 200 includes a receiving unit 210, a decoding unit 220, a transmission data generation unit 230, a digital/analog (D/A) conversion unit 240, a transmission unit 250, and a speaker 260.

It is assumed here that audio data provided by a first transmission apparatus 270 are audio data compressed in a first format which can be decoded by the image apparatus 200, and audio data provided by a second transmission apparatus 280 are audio data compressed in a second format which cannot be decoded by the image apparatus 200.

The receiving unit 210 receives audio data from the first transmission apparatus 270 and the second transmission apparatus 280.

The decoding unit 220 decodes the compressed audio data provided by the first transmission apparatus 270 from among the audio data received by the receiving unit 210. The decoded audio data are output to the D/A conversion unit 240 and the transmission data generation unit 230.

The D/A conversion unit 240 converts the decoded audio data into an analog audio signal, and the speaker 260 amplifies the analog audio signal output from the D/A conversion unit 240 to a certain volume and outputs the audio signal as sound.

The transmission data generation unit 230 combines the audio data in the first format and the second format received by the receiving unit 210 and the audio data decoded by the decoding unit 220 so that transmission data are generated. That is, the transmission data generation unit 230 generates transmission data by allocating different IDs to each kind of audio data.

The transmission unit 250 transmits the generated transmission data to a first receiving apparatus 290. The transmission unit 140 transmits the audio data of the three formats to the first receiving apparatus 290 using a single serial transmission channel. The serial transmission protocol which is the most useful is the HDMI protocol.

If the first transmission apparatus 270 and the second transmission apparatus 280 have the structure of the image apparatus 100 as shown in FIG. 2, the image apparatus 200 of FIG. 3 does not need to perform decoding and the D/A conversion unit 240 converts PCM audio data received by the receiving unit 210 into analog audio data. The transmission data generation unit 230 combines compressed audio data and PCM audio data provided by the first and second transmission apparatuses 270 and 280 respectively in order to generate transmission data. In another case, the compressed audio data and PCM audio data provided by the first and second transmission apparatuses 270 and 280 can be transmitted to the first receiving apparatus 290 through the transmission unit 250 without generating transmission data.

The first receiving apparatus 290 decodes audio data in a decodable format by referring to the allocated IDs of the audio data output from the transmission unit 250, and thus outputs the audio data as sound.

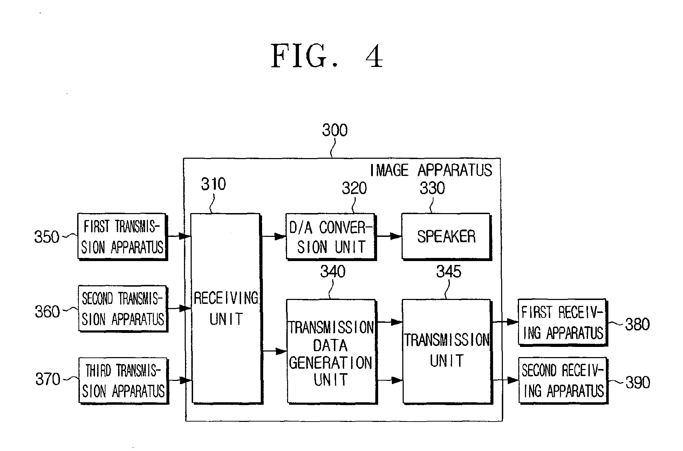

FIG. 4 is a schematic block diagram of an image apparatus.

As shown in FIG. 4, the image apparatus 300 includes a receiving unit 310, a D/A conversion unit 320, a speaker 330, a transmission data generation unit 340, and a transmission unit 345.

A first transmission apparatus 350, a second transmission apparatus 360, and a third transmission apparatus 370 have the structure of the image apparatus 100 as shown in FIG. 2. Therefore, the first transmission apparatus 350 provides audio data compressed in a first format and PCM audio data which is decoded audio data, the second transmission apparatus 360 provides audio data compressed in a second format and PCM audio data which is decoded audio data, and the third transmission apparatus 370 provides audio data compressed in a third format and PCM audio data which is decoded audio data.

The receiving unit 310 receives audio data of diverse formats from the first transmission apparatus 350, the second transmission apparatus 360, and the third transmission apparatus 370.

The D/A conversion unit 320 converts the PCM audio data from among the audio data received by the receiving unit 310 into an analog audio signal, and the speaker 330 amplifies the analog audio signal output from the D/A conversion unit 320 to a certain volume and outputs the audio signal as sound.

The transmission data generation unit 340 generates transmission data by combining the audio data of diverse formats received by the receiving unit 310. That is, the transmission data generation unit 340 generates transmission data to be transmitted to a first receiving apparatus 380 and generates transmission data to be transmitted to a second receiving apparatus 390. For example, transmission data to be transmitted to the first receiving apparatus 380 are generated by combination of the audio data of the two formats from the first transmission apparatus 350 and the audio data of the two formats from the second transmission apparatus 360. In addition, transmission data to be transmitted to the second receiving apparatus 390 are generated by combination of the audio data compressed in the second format from the second transmission apparatus 360 and the audio data of the two formats from the third transmission apparatus 370.

The transmission unit 345 transmits part of the transmission data generated by the transmission data generation unit 340 to the first receiving apparatus 380 through a first serial transmission channel, and transmits the remaining transmission data to the second receiving apparatus 390 through a second serial transmission channel. In FIG. 4, transmission data are transmitted to the two receiving apparatuses 380 and 390 through the two serial transmission channels. Transmission data may also be transmitted to two or more receiving apparatuses through two or more serial transmission channels. The two receiving apparatuses 380 and 390 decode audio data of a decodable format with reference to the IDs of the audio data output from the transmission unit 345, and thus output the audio data as sound.

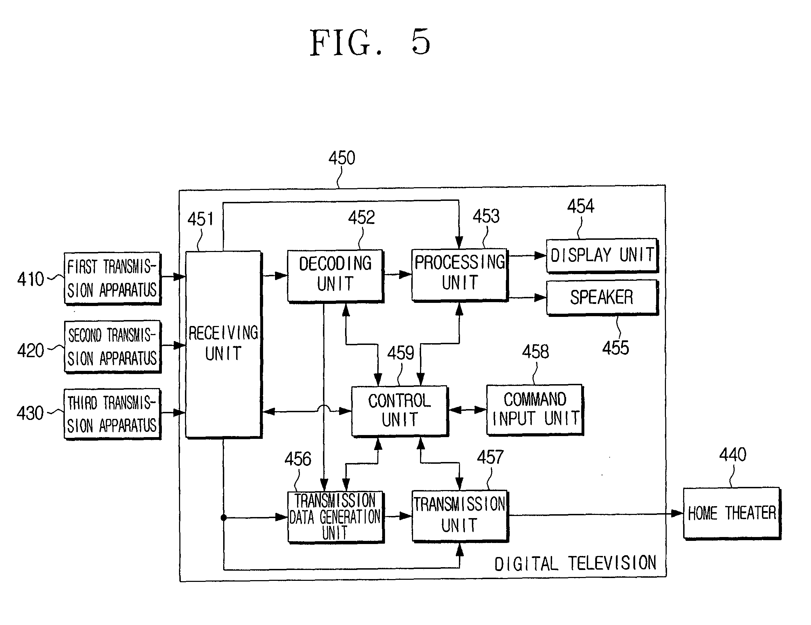

FIG. 5 is a schematic block diagram illustrating a digital television as an image apparatus according to an embodiment of the present invention.

As shown in FIG. 5, the digital television 450 includes a receiving unit 451, a decoding unit 452, a processing unit 453, a display unit 454, a speaker 455, a transmission data generation unit 456, a transmission unit 457, a command input unit 458, and a control unit 459.

A first transmission apparatus 410 provides video data and audio data which are compressed using the MPEG format, a second transmission apparatus 420 provides audio data compressed using the DTS format, and a third transmission apparatus 430 provides audio data compressed in the AC3 format and PCM audio data which is the decoded audio data compressed using the AC3 format. The decoding unit 452 of the digital television 450 decodes video data and audio data which are compressed using the MPEG format. A home theater 440 has a function for decoding audio data compressed using the AC3 and DTS formats.

The receiving unit 451 receives the video data and audio data which are compressed using the MPEG format from the first transmission apparatus 410, receives the audio data compressed using the DTS format from the second transmission apparatus 420, and receives the audio data compressed using the AC3 format and the PCM audio data, which is the decoded audio data compressed using the AC3 format, from the third transmission apparatus 430. In addition, the receiving unit 451 may receive broadcast data from a broadcast station (not shown).

The decoding unit 452 decodes the broadcast data, or video data and audio data compressed using the MPEG format, and outputs the decoded data to the processing unit 453. The audio data decoded by the decoding unit 452 is PCM audio data, and the PCM audio data are output to the processing unit 453 and the transmission data generation unit 456.

The processing unit 453 processes the decoded video data and outputs a displayable signal to the display unit 454, so the display unit 454 displays the video data as an image. The processing unit 453 converts the decoded audio data into an analog audio signal, and the speaker 455 amplifies the analog audio signal output from the processing unit 453 to a certain volume and outputs the audio signal as sound.

According to the control of the control unit 459, the transmission data generation unit 456 combines all of the audio data received by the receiving unit 451 and the PCM audio data decoded by the decoding unit 452, so that transmission data are generated. For example, the transmission data generation unit 456 generates transmission data in which different IDs are allocated to the audio data of each different format.

The transmission unit 457 transmits the generated transmission data to the home theater 440 using serial transmission. That is, the transmission unit 457 transmits the audio data of two formats having different IDs to the home theater 440 using a single serial transmission channel. The serial transmission protocol which is the most useful is the HDMI protocol.

The command input unit 458 receives user commands to operate the digital television 450 and transmits the user commands to the control unit 459.

The control unit 459 operates the digital television 450 according to a user command input through the command input unit 458. If a user command to select audio data to be transmitted to the home theater 440 is input, the control unit 459 operates the transmission data generation unit 456 to generate transmission data containing the selected audio data, and then operates the transmission unit 457 to transmit the generated transmission data to the home theater 440.

For example, in order to transmit to the home theater 440 audio data compressed using the MPEG format which is provided by the first transmission apparatus 410 and audio data compressed using the DTS format which is provided by the second transmission apparatus 420, the control unit 459 operates the transmission data generation unit 456 to generate transmission data by combination of the PCM audio data output from the decoding unit 452 and audio data compressed using the DTS format which is received by the receiving unit 451. Following this process, the home theater 440 can output the audio data provided by the first transmission apparatus 410 and the second transmission apparatus 420 as sound.

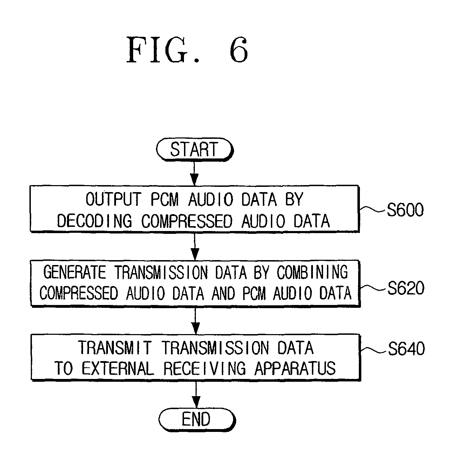

FIG. 6 is a flowchart illustrating the operation of an image apparatus.

As shown in FIG. 6, the image apparatus 100 according to an exemple of the present invention decodes compressed audio data, and thereby outputs PCM audio data (S600). Subsequently, the image apparatus 100 combines the compressed audio data and the PCM audio data, and thereby generates transmission data (S620). For example, the compressed audio data and the PCM audio data are allocated different IDs, and are combined to generate transmission data.

Next, the image apparatus 100 transmits the transmission data to the external receiving apparatus 150 (S640) using serial transmission. That is, the image apparatus 100 transmits the audio data of two formats having different IDs to the receiving apparatus 150 using a single serial transmission channel. The serial transmission protocol which is the most useful is the HDMI protocol.

In the above example, the transmission data are generated by allocating a different ID to each audio data format among diverse formats, but a method for generating transmission data is not limited thereto. A serial transmission protocol which may be used is the HDMI protocol, but any serial transmission protocol able to transmit compressed audio data and PCM audio data can be applied.

As can be appreciated from the above description, audio data of diverse formats are combined to form a single set of transmission data and transmitted using serial transmission over a single physical transmission line, and decoded audio data are transmitted together with compressed audio data in serial transmission, so that convenient connection between A/V apparatuses can be provided and the cost of the A/V apparatus does not need to be increased due to additional decoders.

The foregoing exemplary embodiment is merely exemplary and is not to be construed as limiting the present invention. The present teaching can be readily applied to other types of apparatuses. For example, the claimed apparatus may be a module within an image apparatus. Also, the description of the embodiment of the present invention is intended to be illustrative, and not to limit the scope of the claims, and many alternatives, modifications, and variations will be apparent to those skilled in the art, provided they fall within the scope of the appended claims.

## Claims

1. A digital television comprising:
a receiving unit (451) for receiving audio data compressed using the MPEG format from a first transmission apparatus (410), audio data compressed using the DTS format from a second transmission apparatus (420) and audio data compressed using the AC3 format, and PCM data decoded from the AC3 format audio data, from a third transmission apparatus (430);
a decoding unit (452) for decoding MPEG audio data to PCM audio data;
a command input unit (458) arranged to receive a user command to select audio data to be transmitted to a home theatre (440) having a function to decode audio data compressed using DTS and AC3 formats;
a data generation unit (456) combining all of the audio data received by the receiving unit (451) and the PCM audio data decoded by the decoding unit (452);
a transmission unit (457); and
a control unit (459) arranged to operate the data generation unit (456) to generate transmission data and to operate the transmission unit (457) to transmit the generated transmission data to the home theatre (440);
wherein, according to receipt of a user command by the command input unit (458) selecting audio data compressed using the MPEG and DTS formats to be transmitted to the home theatre, the control unit (459) is arranged to control the data generation unit (456) to generate transmission data containing a combination of the PCM audio data decoded by the decoding unit, and the DTS audio data, and to operate the transmission unit (457) to transmit the generated transmission data to the home theatre (440) using a single serial transmission channel.

2. The digital television of claim 1, wherein the transmission unit (457) is arranged to transmit the generated transmission data to the home theatre (440) using HDMI.

3. The digital television of any one of the preceding claims, further comprising a processing unit (453) for converting the PCM audio data obtained by the decoding unit to an analog audio signal; and
a speaker unit (455) for amplifying the analog audio signal output from the processing unit (453) and outputting the audio signal as sound.

4. The digital television of any one of the preceding claims, wherein the data generation unit (456) is further arranged to generate the transmission data by allocating a different identification (ID) to each of the PCM and DTS audio data.

5. A transmission method performed in a digital television, comprising:
receiving audio data compressed using the MPEG format from a first transmission apparatus (410), audio data compressed using the DTS format from a second transmission apparatus (420) and audio data compressed using the AC3 format, and PCM data decoded from the AC3 format audio data, from a third transmission apparatus (430);
decoding MPEG audio data to PCM audio data; and
receiving a user command to select audio data to be transmitted to a home theatre (440) having a function to decode audio data compressed using DTS and AC3 formats;
wherein, if audio data compressed using the MPEG and DTS formats is selected to be transmitted to the home theatre:
controlling a data generation unit (456), combining all of the audio data received by the receiving unit (451) and the PCM audio data decoded by the decoding unit (452), to generate transmission data containing PCM audio data decoded from the MPEG data, and the DTS audio data, and
controlling a transmission unit (457) to transmit generated transmission data to the home theatre, using a single serial transmission channel.

6. The transmission method of claim 5 or claim 6, further comprising:
converting the PCM audio data into an analog audio signal; and
amplifying the analog audio signal and outputting the audio signal as sound.

7. The transmission method of claim 5 or claim 6, wherein generating transmission data comprises generating the transmission data by allocating a different identification (ID) to each of the PCM and DTS audio data.

## Patentansprüche

1. Digitaler Fernseher, umfassend:
eine Empfangseinheit (451) zum Empfangen von Audiodaten von einer ersten Übertragungsvorrichtung (410), die unter Verwendung des MPEG-Formats komprimiert wurden, von Audiodaten von einer zweiten Übertragungsvorrichtung (420), die unter Verwendung des DTS-Formats komprimiert wurden, und von Audiodaten, die unter Verwendung des AC3-Formats komprimiert wurden und PCM-Daten, die aus den Audiodaten des AC3-Formats decodiert wurden, von einer dritten Übertragungsvorrichtung (430);
eine Decodiereinheit (452) zum Decodieren von MPEG-Audiodaten zu PCM-Audiodaten;
Befehlseingabeeinheit (458), die eingerichtet ist, einen Benutzerbefehl zu empfangen, um an ein Heimkino (440) zu übertragende Audiodaten zu selektierten, das eine Funktion zum Decodieren von Audiodaten aufweist, die unter Verwendung der DTS- und AC3-Formate komprimiert wurden;
eine Datengenerierungseinheit (456), die alle der Audiodaten, die von der Empfangseinheit (451) empfangen wurden und die PCM-Audiodaten, die von der Decodiereinheit (452) decodiert wurden, kombiniert;
eine Übertragungseinheit (457); und
eine Steuereinheit (459), die eingerichtet ist, die Datengenerierungseinheit (456) zu betreiben, um Übertragungsdaten zu generieren und die Übertragungseinheit (457) zu betreiben, um die generierten Übertragungsdaten an das Heimkino (440) zu übertragen;
wobei, übereinstimmend mit dem Empfang eines Benutzerbefehls von der Befehlseingabeeinheit (458), der an das Heimkino zu übertragende Audiodaten selektiert, die unter Verwendung der MPEG- und DTS-Formate komprimiert wurden, die Steuereinheit (459) eingerichtet ist, die Datengenerierungseinheit (456) zu steuern, um Übertragungsdaten zu generieren, die eine Kombination der PCM-Audiodaten, die von der Decodiereinheit decodiert wurden und die DTS-Audiodaten enthält und die Übertragungseinheit (457) zu betreiben, um die generierten Übertragungsdaten an das Heimkino (440) unter Verwendung eines einzelnen seriellen Übertragungskanals zu übertragen.

2. Digitaler Fernseher nach Anspruch 1, wobei die Übertragungseinheit (457) eingerichtet ist, die generierten Übertragungsdaten unter Verwendung von HDMI an das Heimkino (440) zu übertragen.

3. Digitaler Fernseher nach einem beliebigen der vorhergehenden Ansprüche, der weiter eine Verarbeitungseinheit (453) zum Umwandeln der PCM-Audiodaten, die von der Decodiereinheit erhalten wurden, in ein analoges Audiosignal umfasst; und
eine Lautsprechereinheit (455) zum Verstärken des analogen Audiosignals, das von der Verarbeitungseinheit (453) ausgegeben wurde, und zum Ausgeben des Audiosignals als Schall umfasst.

4. Digitaler Fernseher nach einem beliebigen der vorhergehenden Ansprüche, wobei die Datengenerierungseinheit (456) weiter eingerichtet ist, die Übertragungsdaten durch Zuordnung einer verschiedenen Identifikation (ID) zu jeden der PCM- und DTS-Audiodaten zu generieren.

5. Übertragungsverfahren, das in einem digitalen Fernseher ausgeführt wird, umfassend:
Empfangen von Audiodaten von einer ersten Übertragungsvorrichtung (410), die unter Verwendung des MPEG-Formats komprimiert wurden, von Audiodaten von einer zweiten Übertragungsvorrichtung (420), die unter Verwendung des DTS-Formats komprimiert wurden, und von Audiodaten, die unter Verwendung des AC3-Formats komprimiert wurden und PCM-Daten, die aus den Audiodaten des AC3-Formats decodiert wurden, von einer dritten Übertragungsvorrichtung (430);
Decodieren von MPEG-Audiodaten zu PCM-Audiodaten; und
Empfangen eines Benutzerbefehls, um an ein Heimkino (440) zu übertragende Audiodaten zu selektierten, das eine Funktion zum Decodieren von Audiodaten aufweist, die unter Verwendung der DTS- und AC3-Formate komprimiert wurden;
wobei, wenn Audiodaten, die unter Verwendung der MPEG- und DTS-Formate komprimiert wurden, zum Übertragen an das Heimkino selektiert werden:
Steuern einer Datengenerierungseinheit (456), Kombinieren aller der Audiodaten, die von der Empfangseinheit (451) empfangen wurden, und der PCM-Audiodaten, die von der Decodiereinheit (452) decodiert wurden, um Übertragungsdaten zu generieren, die PCM-Audiodaten, die aus den MPEG-Daten decodiert wurden und die DTS-Audiodaten enthalten, und
Steuern einer Übertragungseinheit (457) zum Übertragen generierter Übertragungsdaten an das Heimkino unter Verwendung eines einzelnen seriellen Übertragungskanals.

6. Übertragungsverfahren nach Anspruch 5 oder Anspruch 6, weiter umfassend:
Umwandeln der PCM-Audiodaten in ein analoges Audiosignal; und
Verstärken des analogen Audiosignals und Ausgeben des Audiosignals als Schall.

7. Übertragungsverfahren nach Anspruch 5 oder Anspruch 6, wobei das Generieren von Übertragungsdaten das Generieren der Übertragungsdaten durch Zuordnung einer verschiedenen Identifikation (ID) zu jeden der PCM- und DTS-Audiodaten umfasst.

## Revendications

1. Téléviseur numérique comprenant :
une unité de réception (451) pour recevoir des données audio comprimées à l'aide du format MPEG à partir d'un premier appareil de transmission (410), des données audio comprimées à l'aide du format DTS à partir d'un deuxième appareil de transmission (420) et des données audio comprimées à l'aide du format AC3, ainsi que des données PCM décodées à partir des données audio en format AC3, à partir d'un troisième appareil de transmission (430) ;
une unité de décodage (452) pour décoder des données audio MPEG en données audio PCM ;
une unité d'entrée d'instructions (458) agencée pour recevoir une instruction Utilisateur pour sélectionner des données audio devant être transmises à un cinéma maison (440) possédant une fonction destinée à décoder des données audio comprimées à l'aide des formats DTS et AC3 ;
une unité de génération de données (456) combinant la totalité des données audio reçues par l'unité de réception (451), et les données audio PCM décodées par l'unité de décodage (452) ;
une unité de transmission (457) ; et
une unité de commande (459) agencée pour exploiter l'unité de génération de données (456) afin de générer des données de transmission et pour exploiter l'unité de transmission (457) afin de transmettre les données de transmission générées vers le cinéma maison (440) ;
cas dans lequel, en fonction de la réception d'une instruction Utilisateur par l'unité d'entrée d'instructions (458) sélectionnant des données audio comprimées à l'aide des formats MPEG et DTS devant être transmises au cinéma maison, l'unité de commande (459) est agencée pour piloter l'unité de génération de données (456) afin de générer des données de transmission contenant une combinaison des données audio PCM décodées par l'unité de décodage, ainsi que les données audio DTS, et pour exploiter l'unité de transmission (457) afin de transmettre les données de transmission générées vers le cinéma maison (440) grâce à l'utilisation d'un canal de transmission série unique.

2. Téléviseur numérique selon la revendication 1, l'unité de transmission (457) étant agencée pour transmettre les données de transmission générées au cinéma maison (440) à l'aide de HDMI.

3. Téléviseur numérique selon l'une quelconque des revendications précédentes, comprenant en outre une unité de traitement (453) pour convertir les données audio PCM obtenues par l'unité de décodage en un signal audio analogique ;
et
une unité haut-parleur (455) pour amplifier la sortie de signaux audio analogiques provenant de l'unité de traitement (453) et pour produire le signal audio sous forme de son.

4. Téléviseur numérique selon l'une quelconque des revendications précédentes, l'unité de génération de données (456) étant agencée en outre pour générer les données de transmission grâce à l'attribution d'une identification (ID) différente à chacune des données audio PCM et DTS.

5. Procédé de transmission réalisé dans un téléviseur numérique, comprenant les opérations consistant à :
recevoir des données audio comprimées à l'aide du format MPEG à partir d'un premier appareil de transmission (410), des données audio comprimées à l'aide du format DTS à partir d'un deuxième appareil de transmission (420) et des données audio comprimées à l'aide du format AC3, ainsi que des données PCM décodées à partir des données audio en format AC3, à partir d'un troisième appareil de transmission (430) ;
décoder des données audio MPEG en données audio PCM ; et
recevoir une instruction Utilisateur pour sélectionner des données audio devant être transmises à un cinéma maison (440) possédant une fonction destinée à décoder des données audio comprimées à l'aide des formats DTS et AC3 ;
cas dans lequel, si des données audio comprimées à l'aide des formats MPEG et DTS sont sélectionnées en vue de leur transmission au cinéma maison :
piloter une unité de génération de données (456), combinant la totalité des données audio reçues par l'unité de réception (451) et les données audio PCM décodées par l'unité de décodage (452), afin de générer des données de transmission contenant des données audio PCM décodées à partir de données MPEG, ainsi que les données audio DTS, et
piloter une unité de transmission (457) afin de transmettre les données de transmission générées vers le cinéma maison grâce à l'utilisation d'un canal de transmission série unique.

6. Procédé de transmission selon la revendication 5 ou la revendication 6, comprenant en outre les opérations consistant à :
convertir les données audio PCM en un signal audio analogique ; et
amplifier le signal audio analogique et produire le signal audio sous forme de son.

7. Procédé de transmission selon la revendication 5 ou la revendication 6, la génération de données de transmission comprenant la génération de données de transmission grâce à l'attribution d'une identification (ID) différente à chacune des données audio PCM et DTS.
